# FASCICULE DE BREVET EUROPEEN

(11) **EP 1 611 062 B1**
(45) Date de publication et mention de la délivrance du brevet: **11.10.2006**
(21) Numéro de dépôt: 04742366.0
(22) Date de dépôt: 26.03.2004
(51) Int. Cl.: C03B 23/025, C03B 23/035, C03B 35/20

(54) **PROCEDE ET DISPOSITIF DE BOMBAGE DE VITRES**
VERFAHREN UND VORRICHTUNG ZUM BIEGEN VON GLASSCHEIBEN
METHOD AND DEVICE FOR CROWNING GLASS SHEETS

(30) Priorité: 29.03.2003 DE 10314266
(43) Date de publication de la demande: 04.01.2006
(73) Titulaire: SAINT-GOBAIN GLASS FRANCE, 92400 Courbevoie (FR)
(72) Inventeur: OLLFISCH, Karl-Josef, 52080 Aachen (DE); MEISSEN, Thomas, 52499 Baesweiler (DE); RADERMACHER, Herbert, B-4730 Raeren (BE); LABROT, Michael, 52072 Aachen (DE)
(74) Mandataire: Colombier, Christian
(86) Numéro de dépôt international: PCT/FR2004/000762
(87) Numéro de publication internationale: WO 2004/087589

(56) Documents cités:
- DE-A- 10 105 200
- US-A- 4 575 390
- PATENT ABSTRACTS OF JAPAN vol. 010, no. 269 (C-372), 12 septembre 1986 (1986-09-12) -& JP 61 091025 A (NIPPON SHEET GLASS CO LTD), 9 mai 1986 (1986-05-09)
- PATENT ABSTRACTS OF JAPAN vol. 012, no. 258 (C-513), 20 juillet 1988 (1988-07-20) -& JP 63 045138 A (ASAHI GLASS CO LTD), 26 février 1988 (1988-02-26)
- PATENT ABSTRACTS OF JAPAN vol. 2000, no. 14, 5 mars 2001 (2001-03-05) -& JP 2000 327352 A (ASAHI GLASS CO LTD), 28 novembre 2000 (2000-11-28)

## Description

L'invention concerne un procédé de bombage de vitres, dans lequel les vitres sont prébombées par l'action de la pesanteur en position horizontale sur un cadre de bombage et sont ensuite bombées à leur forme finale à l'aide d'une forme de bombage final agissant sur les vitres prébombées. Elle se rapporte également à un dispositif convenant particulièrement pour la mise en oeuvre de ce procédé. Des vitres bombées sont souvent encore façonnées en fenêtres de véhicules ou en vitres pour le bâtiment.

Par le document EP 0 705 798 B1, on connaît un procédé de bombage sur cadre d'une ou de plusieurs vitres disposées par paires l'une sur l'autre, sous l'action de la pesanteur, dans lequel la/les vitre(s) déposée(s) sur un cadre de prébombage rigide s'adaptent au profil de ce cadre de bombage sous l'action de la pesanteur. Dans une deuxième étape de bombage qui suit, les vitres à bomber sont transférées du cadre de prébombage situé à l'extérieur sur un cadre de bombage final mobile situé à l'intérieur, qui peut être commandé de façon purement mécanique.

Le document DE 43 37 559 C1 décrit un procédé dans lequel des paires de vitres prébombées sur un cadre de bombage sont appliquées par le bas sur une forme de bombage supérieure pleine. La forme de bombage pleine est entourée du côté du bord par une jupe qui forme une fente annulaire avec le bord extérieur de la forme de bombage supérieure. Après l'application des vitres chauffées sur la forme de bombage supérieure au moyen du cadre de bombage, on aspire de l'air à travers ladite fente annulaire avec une grande vitesse d'écoulement. De ce fait, les deux vitres s'appliquent pleinement sur la forme de bombage supérieure. Elles reçoivent ensemble leur configuration sphérique définitive. L'écoulement d'air dans la fente annulaire doit également chasser d'éventuelles inclusions d'air entre les deux vitres.

Un autre procédé pour le bombage par paires de vitres superposées chauffées à leur température de ramollissement est connu par le document DE 101 05 200 A1. La paire de vitres est en l'occurrence déposée sur un cadre de bombage en vue d'un prébombage sous l'action de la pesanteur et ensuite transférée sous forme de paire de vitres prébombées sur une forme de bombage pleine à aspiration à surface de formage concave, assurant ainsi une application de la face inférieure de la vitre inférieure au moins sur le bord périphérique de la surface de formage. Par l'application d'une dépression pendant un laps de temps déterminé, l'air est aspiré de l'espace entre la face inférieure de la vitre inférieure et la forme de bombage à aspiration et la paire de vitres est pressée par la pression ambiante contre la face de formage concave de la forme de bombage à aspiration. A la fin de l'exposition à la dépression, on opère le transfert de la paire de vitres à leur forme finale de la forme de bombage à aspiration sur un dispositif de transport et ensuite le refroidissement.

Le problème à la base de l'invention est de procurer un autre procédé de bombage de vitres ainsi qu'un dispositif convenant pour la mise en oeuvre de ce procédé.

Conformément à l'invention, ce problème est résolu en ce qui concerne le procédé par les caractéristiques de la revendication 1. Les caractéristiques de la revendication 10 présentent un dispositif correspondant. Les caractéristiques des revendications dépendantes respectivement associées aux revendications indépendantes indiquent des formes de réalisation avantageuses de ces objets.

Dans le procédé de bombage conforme à l'invention, le formage des vitres chauffées à leur température de ramollissement est opéré en au moins deux étapes, à savoir une étape de prébombage par l'action de la pesanteur sur une forme de prébombage et une autre étape de bombage sur une deuxième forme de bombage final en forme de cadre. Les vitres sont reprises de la forme de prébombage, soulevées et déposées sur la forme de bombage final à l'aide d'une forme de transfert. La forme de transfert, dont les dimensions extérieures sont plus petites que les ouvertures libres de la forme de prébombage et de la forme de bombage final, est à cet effet déplacée de bas en haut à travers la forme de prébombage, dans le sens contraire à l'action de la pesanteur. En l'occurrence, la forme de transfert reprend les vitres et les transporte horizontalement à une distance suffisamment grande au-dessus de la forme de prébombage, de telle façon que la forme de bombage final puisse être déplacée en dessous de la forme de transfert et être alignée sur celle-ci en projection verticale. Ensuite, la forme de transfert est abaissée à travers la forme de bombage final, les vitres étant alors déposées sur la forme de bombage final et soumises à l'opération de bombage final. L'alignement horizontal entre la forme de transfert et la forme de bombage final peut être effectué par un déplacement horizontal soit de la forme de transfert soit de la forme de bombage final.

Etant donné que les dimensions extérieures de la forme de transfert sont plus petites que celles de la forme de prébombage et que celles de la forme de bombage final, les bords périphériques des vitres débordent au-delà des surfaces de réception des vitres de la forme de transfert. Ces bords périphériques forment les surfaces de contact avec les surfaces de formage d'un anneau de prébombage et de bombage final.

Par la séparation de l'anneau de prébombage et de bombage final dans le procédé conforme à l'invention, on peut obtenir plusieurs avantages. D'une part, des outils de bombage séparés pour l'étape de prébombage et de bombage final sont plus simples et plus économiques à fabriquer qu'un outil combiné disposé au complet sur un cadre de base. Par ailleurs, les outils peuvent être mieux adaptés à leur fonction respective, sans devoir accepter des compromis pour cause d'insuffisance d'espace disponible ou pour des raisons de transferts de chaleur empêchés en raison d'outils combinés massifs. Enfin, en raison de la séparation de la forme de prébombage et de bombage final, un four peut être construit avec deux compartiments; dans le premier compartiment, une ou de préférence plusieurs formes de prébombage portant des vitres sont chauffées à une première température déterminée, tandis que le second compartiment comprend une cabine de bombage, dans laquelle la forme de bombage final est disposée et où le bombage final est effectué sous l'influence d'une seconde température plus élevée que la première.

Dans la forme de réalisation la plus simple du procédé conforme à l'invention, tant le prébombage que le bombage final sont effectués sous l'action de la pesanteur. Il est cependant également possible d'exécuter une troisième étape de bombage, en équipant la forme de transfert de moyens supplémentaires pour le bombage des vitres. Ainsi par exemple, il est possible de disposer dans la forme de transfert un dispositif pour produire une dépression, qui agit sur la face inférieure des vitres et provoque ainsi un bombage supplémentaire. Une telle forme de transfert peut aussi être constituée par une forme de bombage concave pleine qui, contrairement à des formes de bombage en forme de cadres, permet aussi d'influencer et de régler exactement la forme et la profondeur de bombage des zones centrales des vitres.

Selon une autre forme de réalisation avantageuse du procédé conforme à l'invention, l'étape de bombage final peut, en complément ou en remplacement, être constituée par une étape de bombage par pressage. A cet effet, on a besoin d'une forme supérieure, qui presse les vitres placées sur la forme de bombage final à la forme désirée dans des régions déterminées. La forme supérieure peut en l'occurrence être annulaire, de telle façon que seule la zone périphérique des vitres appuyée sur la forme de bombage final soit déformée de force. On préfère cependant une forme supérieure convexe pleine, avec laquelle toute la surface des vitres peut être influencée. De plus, la forme supérieure peut être équipée d'un moyen pour produire une surpression ou une dépression en vue d'accentuer l'opération de pressage. La différence de pression agit alors entre la surface supérieure des vitres et la face de formage orientée vers le bas de la forme supérieure, et déforme les vitres de la façon souhaitée.

Le procédé conforme à l'invention convient aussi bien pour des vitres individuelles que pour des paires de vitres placées l'une sur l'autre, qui sont usuellement parachevées en vitrages de sécurité feuilletés après l'opération de bombage.

A la suite du procédé de bombage, on opère un refroidissement des vitres individuelles ou des paires de vitres. Si les vitres individuelles sont destinées à former des verres de sécurité trempés, le refroidissement doit de façon connue être exécuté très rapidement, pour produire les contraintes nécessaires dans la vitre. La trempe dite thermique doit en général être effectuée sur un anneau de trempe spécial. Le transfert des vitres individuelles ou des paires de vitres sur un dispositif de refroidissement ou de trempe peut être effectué à l'aide d'une autre forme de transfert, comme lors du transfert de la forme de prébombage à la forme de bombage final. En cas d'utilisation d'une deuxième forme de transfert, le procédé de bombage conforme à l'invention peut se passer d'utiliser une pression différentielle pour le transport des vitres. Il est naturellement possible également de soulever les vitres individuelles hors de la forme de bombage final en produisant une dépression à la forme supérieure et de les déposer sur un anneau de trempe. Dans le cas des paires de vitres, on peut produire à l'aide d'une jupe et d'un courant d'air circulant autour de la forme supérieure et à grande vitesse à travers la fente annulaire entre la jupe et la forme supérieure une pression différentielle, par laquelle les paires de vitres peuvent être soulevées hors de la forme de bombage final.

D'autres détails et avantages de l'objet de l'invention apparaîtront, sans aucune intention de limitation, par la représentation illustrée de différentes phases de la mise en oeuvre du procédé dans un dispositif correspondant ainsi que la description détaillée qui suit.

Dans les dessins montrant des représentations de principe très simplifiées:
la Fig. 1 montre l'opération de prébombage,
la Fig. 2 illustre le transfert de la vitre de la forme de prébombage à la forme de transfert;
la Fig. 3 montre le positionnement de la forme de bombage final sous la forme de transfert;
la Fig. 4 illustre le transfert de la vitre de la forme de transfert à la forme de prébombage;
la Fig. 5 montre le positionnement de la forme de bombage final en dessous de la forme supérieure;
la Fig. 6 illustre l'opération de pressage; et
la Fig. 7 montre la vitre après l'opération de pressage dans la forme de bombage final.

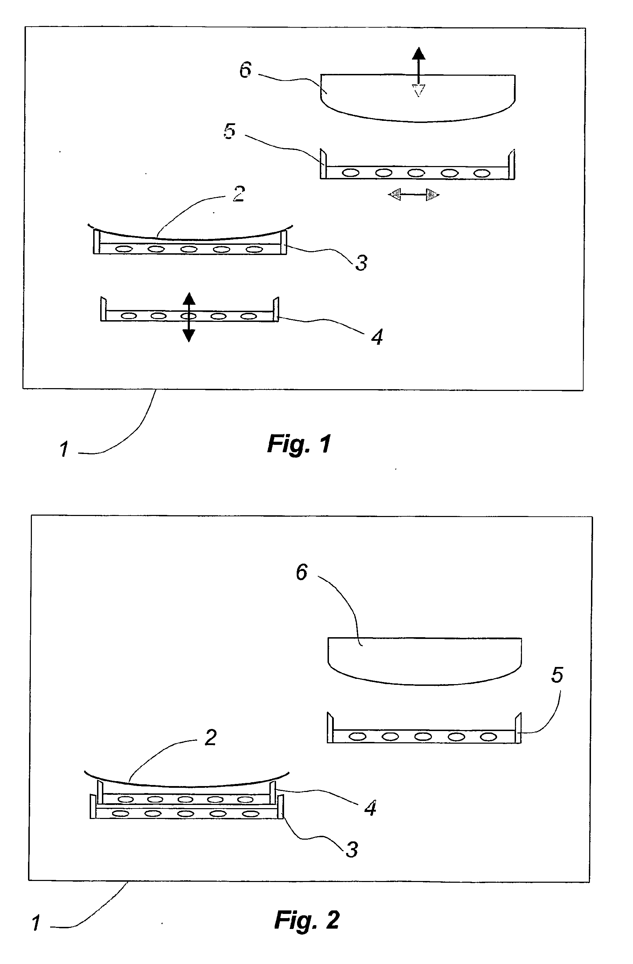

La Fig. 1 montre, à l'intérieur d'une station de bombage 1 indiquée simplement par un cadre, une vitre 2 chauffée à la température de bombage, qui est placée sur une forme de prébombage en forme de cadre 3 et qui a déjà été soumise à un prébombage sous l'action de la pesanteur. Les moyens de transport, avec lesquels la forme de prébombage 3 a été amenée dans la cabine de bombage ainsi que le four de chauffage ne sont pas représentés ici. La forme de prébombage 3 peut servir pour le transport de la vitre 2 à travers le four de chauffage, il est cependant également possible d'utiliser d'autres moyens pour le transport des vitres à travers le four et pour transférer ensuite la vitre 2 sur la forme de prébombage. L'étape de prébombage se déroule à chaque fois sous l'action de la pesanteur sur la forme de prébombage 3. Ce prébombage a déjà eu lieu dans la phase illustrée dans la Fig. 1.

En dessous de la forme de prébombage 3 se trouve une forme de transfert 4 également en forme de cadre, dont le périmètre extérieur est plus petit que celui de l'espace libre entouré par les surfaces de formage de la forme de prébombage 3.

En position décalée horizontalement par rapport à la forme de prébombage 3 et à la forme de transfert 4, il se trouve une forme de bombage final en forme de cadre 5 ainsi qu'une forme supérieure convexe pleine 6. La forme supérieure 6 ne doit pas obligatoirement être employée, toutefois son utilisation peut au besoin, en particulier en présence de formes de vitres complexes, améliorer sensiblement la précision de la forme en particulier des zones centrales de la vitre 2 après l'opération de bombage.

Les flèches dans la Fig. 1 indiquent dans quelles directions la forme de transfert 4, la forme de bombage final 5 et la forme supérieure 6 peuvent être déplacées parallèlement au plan du dessin par des dispositifs d'entraînement non représentés ici. La forme de prébombage 3 peut en outre être transportable par exemple dans une direction sortant du plan du dessin, pour atteindre le four (non représenté) qui peut se trouver en perspective derrière la station de bombage 1.

Bien entendu, toutes les surfaces, qui viennent en contact avec la vitre chaude 2, sont usinées de la façon habituelle et/ou sont pourvues d'un tissu tissé ou tricoté résistant à la chaleur et/ou d'un revêtement correspondant.

La Fig. 2 montre l'opération de transfert de la vitre 2 de la forme de prébombage 3 à la forme de transfert 4. Cette dernière se déplace à cet effet de bas en haut (contrairement au sens de la pesanteur) à travers la forme de prébombage 3 et soulève ainsi la vitre 2 de la surface de formage de la forme de prébombage 3. Le périmètre extérieur de la forme de transfert 4 est de taille légèrement plus petite que l'ouverture intérieure de la forme de prébombage en forme de cadre 3, de telle façon qu'elle puisse être conduite à travers la forme de prébombage avec un faible intervalle de tous les côtés lors du soulèvement. Bien entendu, le mouvement pourrait également être inversé, c'est-à-dire que la forme de prébombage 3 serait abaissée sur la forme de transfert 4.

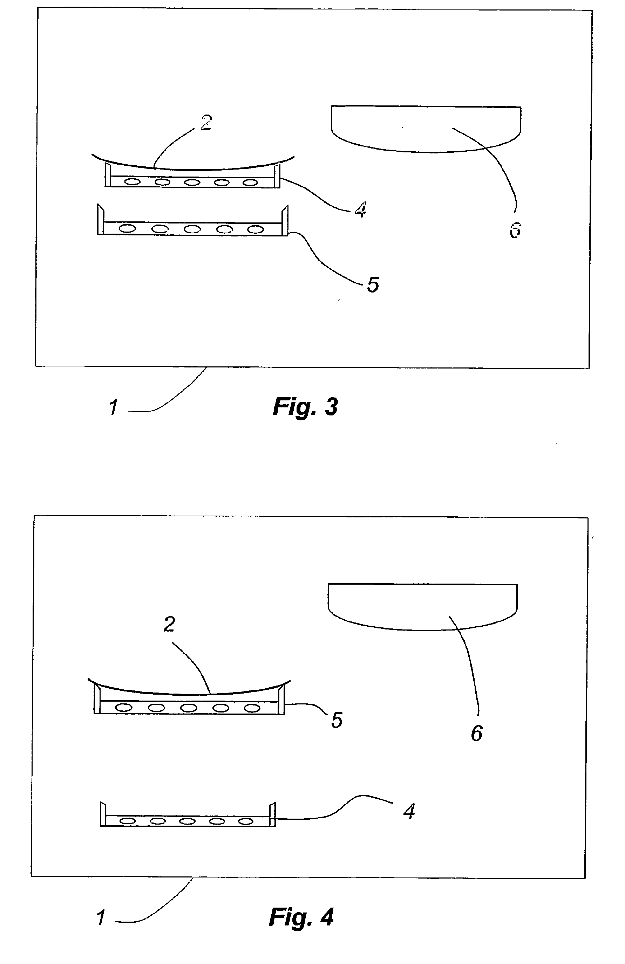

La Fig. 3 montre la phase suivante du procédé de bombage conforme à l'invention, où la forme de transfert 4 avec la vitre 2 a atteint sa position la plus haute et où la forme de bombage final a été déplacée horizontalement et positionnée sous la forme de transfert. Ici également, les mouvements pourraient évidemment être échangés, c'est-à-dire que la forme de transfert pourrait exécuter le déplacement horizontal vers la forme de bombage final. La forme de prébombage 3 est dans l'intervalle sortie de la cabine de bombage 1, par exemple pour faire place à une autre forme de prébombage avec la vitre suivante à bomber ou même pour enlever la vitre suivante.

La forme de transfert 4 est, comme le montre la Fig. 4, abaissée à travers la forme de bombage final 5, la vitre 2 étant déposée avec ses zones de bord débordantes sur les surfaces de formage de la forme de bombage final en forme de cadre 5. Le périmètre extérieur de la forme de transfert 4 doit à nouveau être légèrement plus petit que l'ouverture intérieure de la forme de bombage final en forme de cadre 5, de telle façon qu'elle puisse être conduite à travers la forme de bombage final 5 avec un faible intervalle de tous les côtés lors de l'abaissement.

La forme de transfert 4 est de préférence déjà à présent abaissée de telle façon qu'elle se trouve dans la position initiale prévue pour un nouveau transfert d'une vitre prébombée.

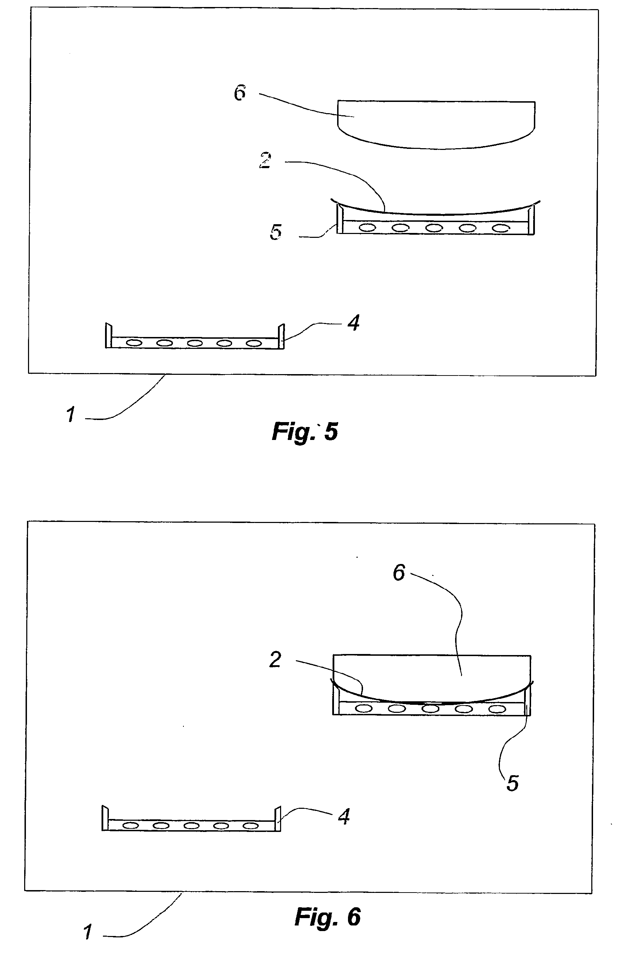

Pour l'opération de pressage en option, comme mentionné plus haut, la forme de bombage finale 5 portant la vitre 2 est positionnée horizontalement en dessous de la forme supérieure 6 (Fig. 5). Dans la phase suivante du procédé de bombage, représentée dans la Fig. 6, la vitre 2 est pressée contre la forme supérieure 6 par la forme de bombage final 5. Cette opération de pressage est en général nécessaire lorsqu'un deuxième bombage par la pesanteur sur la forme de bombage final 5 ne suffit pas pour atteindre l'allure bombée désirée de la vitre 2. L'opération de pressage débute par l'abaissement vertical de la forme supérieure 6 de forme complémentaire à la forme de bombage final 5, de telle façon que les bords de la vitre soient pressés à leur forme définitive sur la forme de bombage final 5. Le formage au milieu de la vitre peut encore être renforcé en produisant une pression différentielle entre la surface supérieure de la vitre 2 et la surface de formage orientée vers le bas de la forme supérieure 6, par exemple pour aspirer la vitre 2 sur ladite surface de formage.

Il convient de remarquer que la forme de bombage final 5 pourrait, à la différence de la représentation simplifiée montrée ici, s'étendre au moins jusqu'aux bords de la vitre, le cas échéant même au-delà, si elle est utilisée comme forme de pressage pour l'application de la vitre contre une forme supérieure.

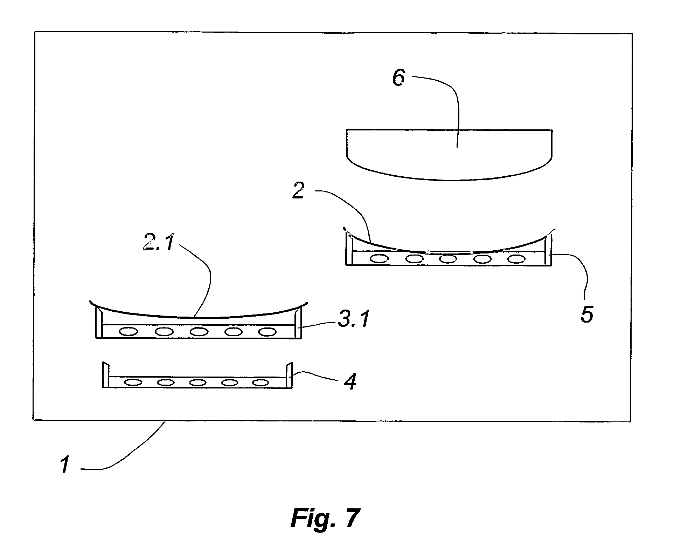

Après le soulèvement de la forme supérieure 6, la vitre 2 est, comme le montre la Fig. 7, bombée à sa forme finale et elle peut être enlevée avec un moyen approprié hors de la forme de bombage final 5 en vue du refroidissement ou de la trempe. En même temps, on introduit une nouvelle vitre 2.1 sur un anneau de prébombage 3.1, de telle façon qu'un nouveau cycle de bombage puisse être exécuté.

Comme on l'a déjà expliqué plus haut, les mouvements relatifs entre les diverses pièces du dispositif de bombage peuvent bien entendu être échangés l'un par rapport à l'autre. De même, la vitre peut aussi être une paire de deux vitres, qui sont bombées ensemble.

## Revendications

1. Procédé de bombage de vitres (2, 2.1) chauffées à leur température de ramollissement, présentant les caractéristiques suivantes:
- les vitres (2, 2.1) sont déposées sur un cadre de bombage concave (3, 3.1) et prébombées sous l'action de la pesanteur,
- les vitres prébombées (2, 2.1) sont transférées sur une forme de transfert (4) à surface de formage concave, dont les dimensions extérieures sont plus petites que celles de la surface entourée par le cadre de bombage concave (3, 3.1), en déplaçant la forme de transfert (4) en un mouvement relatif sensiblement vertical à travers le cadre de bombage concave (3, 3.1),
- la forme de transfert (4) est amenée en recouvrement vertical avec une forme de bombage final en forme de cadre (5) à surface de formage concave, les dimensions extérieures de la forme de transfert (4) étant à nouveau plus petites que celles de la surface entourée par la forme de bombage final concave (5),
- la forme de transfert (4) est déplacée en un mouvement relatif sensiblement vertical à travers la forme de bombage final en forme de cadre (5), les vitres (2, 2.1) étant déposées sur la forme de bombage final (5),
- les vitres (2, 2.1) sont bombées à leur forme finale,
- à la fin de l'opération de bombage, les vitres à leur forme finale (2, 2.1) sont transférées de la forme de bombage final (5) sur un dispositif de transport et refroidies.

2. Procédé selon la revendication 1, **caractérisé en ce que** les vitres (2, 2.1) sont soumises à une opération supplémentaire de bombage sur la forme de transfert (4) au moyen d'une pression différentielle.

3. Procédé selon la revendication 1 ou 2, **caractérisé en ce que** les vitres (2, 2.1) sont bombées à leur forme finale sur la forme de bombage final (5) par l'action de la pesanteur.

4. Procédé selon la revendication 1 ou 2, **caractérisé en ce que** les vitres (2, 2.1) sont bombées à leur forme finale à l'aide d'une forme supérieure (6) complémentaire à la forme de bombage final (5), qui presse les vitres (2, 2.1) au moins dans leur zone de bord sur la forme de bombage final (5).

5. Procédé selon la revendication 4, **caractérisé en ce que** l'étape de bombage par pressage est en outre renforcée au moyen d'une pression différentielle.

6. Procédé selon l'une quelconque des revendications précédentes, **caractérisé en ce que** l'on bombe des vitres individuelles (2, 2.1).

7. Procédé selon la revendication 6, **caractérisé en ce que** les vitres individuelles (2, 2.1) sont, à la suite de l'opération de bombage final, déposées de la forme de bombage final (5) sur un anneau de trempe et trempées.

8. Procédé selon l'une quelconque des revendications 1 à 5, **caractérisé en ce que** l'on bombe plusieurs vitres placées l'une sur l'autre.

9. Procédé selon la revendication 8, **caractérisé en ce que** les vitres placées l'une sur l'autre sont, à la suite de l'opération de bombage final, déposées de la forme de bombage final (5) sur un dispositif de refroidissement et refroidies à une température inférieure à la température de ramollissement.

10. Dispositif de bombage de vitres (2, 2.1) chauffées à leur température de ramollissement, en particulier pour la mise en oeuvre du procédé selon l'une quelconque des revendications précédentes, dans lequel le dispositif comprend
- un four pour le chauffage des vitres (2, 2.1),
- un cadre de bombage concave (3, 3.1) pour porter et prébomber les vitres chauffées (2, 2.1),
- des moyens d'entraînement pour déplacer le cadre de bombage (3, 3.1), la forme de transfert (4) et la forme de bombage final (5) dans le sens du transfert respectif des vitres,
- des moyens pour transporter les vitres bombées à leur forme finale (2, 2.1) dans une station de refroidissement le dispositif étant **caractérisé en ce qu'**il comprend :
- une forme de transfert (4) à surface de formage concave, dont le périmètre est plus petit que le périmètre du cadre de bombage (3, 3.1) et sur laquelle les vitres (2, 2.1) sont transférées,
- une forme de bombage final (5) à surface de formage concave, dont le périmètre est plus grand que le périmètrede la forme de transfert (4), et sur laquelle les vitres (2, 2.1) sont transférées depuis la forme de transfert (4).

11. Dispositif selon la revendication 10, **caractérisé en ce que** la forme de transfert (4) est pourvue d'un moyen pour produire une dépression entre sa surface de formage et les vitres (2, 2.1).

12. Dispositif selon la revendication 11, **caractérisé en ce que** la forme de transfert (4) présente une surface concave pleine.

13. Dispositif selon l'une quelconque des revendications 10 à 12, **caractérisé en ce que** le dispositif comprend une forme supérieure (6) complémentaire à la forme de bombage final (5), qui peut être mise en contact au moins avec les zones de bord des vitres (2, 2.1) placées sur la forme de bombage final.

14. Dispositif selon la revendication 13, **caractérisé en ce que** la forme supérieure (6) est pourvue d'un moyen pour produire une pression différentielle entre la surface de formage de la forme supérieure (6) et la surface supérieure des vitres (2, 2.1).

15. Dispositif selon l'une quelconque des revendications 13 ou 14, **caractérisé en ce que** la forme supérieure (6) présente une surface convexe pleine.

## Claims

1. A process for bending glass sheets (2, 2.1) heated to their softening point, comprising the following features:
- the glass sheets (2, 2.1) are laid on a concave bending frame (3, 3.1) and prebent by gravity,
- the prebent glass sheets (2, 2.1) are transferred to a transfer former (4) with a concave forming surface, whose outside dimensions are smaller than those of the area enclosed by the concave bending frame (3, 3.1), by moving the transfer former (4) in a generally vertical relative movement through the concave bending frame (3, 3.1),
- the transfer former (4) is positioned so that it vertically overlies a final bending former in the form of a frame (5) with a concave forming surface, the outside dimensions of the transfer former (4) once again being smaller than those of the area enclosed by the concave final bending former (5),
- the transfer former (4) is moved in a generally vertical relative movement through the final bending former in the form of a frame (5), the glass sheets (2, 2.1) being laid on the final bending former (5),
- the glass sheets (2, 2.1) are bent into their final shape, and
- at the end of the bending operation, the glass sheets in their final shape (2, 2.1) are transferred from the final bending former (5) to a transport system and cooled.

2. The process as claimed in claim 1, **characterized in that** the glass sheets (2, 2.1) are put through an additional bending operation on the transfer former (4) by means of a differential pressure.

3. The process as claimed in claim 1 or 2, **characterized in that** the glass sheets (2, 2.1) are bent into their final shape on the final bending former (5) by gravity.

4. The process as claimed in claim 1 or 2, **characterized in that** the glass sheets (2, 2.1) are bent into their final shape using an upper former (6) complementary in shape to the final bending former (5), which presses the glass sheets (2, 2.1) in at least their edge region onto the final bending former (5).

5. The process as claimed in claim 4, **characterized in that** the press bending step is also assisted by a differential pressure.

6. The process as claimed any one of the preceding claims, **characterized in that** individual glass sheets (2, 2.1) are bent.

7. The process as claimed in claim 6, **characterized in that** following the final bending operation, the individual glass sheets (2, 2.1) are removed from the final bending former (5) on a toughening ring and toughened.

8. The method as claimed in any one of claims 1 - 5, **characterized in that** several glass sheets placed on top of each other are bent.

9. ; The method as claimed in claim 8, **characterized in that** the glass sheets placed on top of each other are, following the final bending operation, removed from the final bending former (5) on a cooling system and cooled to a temperature below the softening point.

10. A system for bending glass sheets (2, 2.1) heated to their softening point, particularly for carrying out the process as claimed in any one of the preceding claims, in which the system comprises
- an oven for the heating the glass sheets (2, 2.1),
- a concave bending frame (3, 3.1) for carrying and prebending the heated glass sheets (2, 2.1),
- drive means for moving the bending frame (3, 3.1), the transfer former (4) and the final bending former (5) in the direction of the respective transfer of the glass sheets, and
- means for transporting the glass sheets (2, 2.1), bent to their final shape, into a cooling station,
said system being **characterized in that** it comprises:
- a transfer former (4) with a concave forming surface, whose perimeter is smaller than the perimeter of the bending frame (3, 3.1) and on which the glass sheets (2, 2.1) are transferred,
- a final bending former (5) with a concave forming surface, whose perimeter is greater than the perimeter of the transfer former (4), and to which the glass sheets (2, 2.1) are transferred from the transfer former (4).

11. The system as claimed in claim 10, **characterized in that** the transfer former (4) is provided with a means for producing a depression between its forming surface and the glass sheets (2, 2.1).

12. The system as claimed in claim 11, **characterized in that** the transfer former (4) has a solid concave surface.

13. The system as claimed in any one of claims 10 - 12, **characterized in that** the system comprises an upper former (6) complementary in shape to the final bending former (5), which may be placed in contact with at least the edge regions of the glass sheets (2, 2.1) placed on the final bending former.

14. The system as claimed in claim 13, **characterized in that** the upper former (6) is provided with a means for producing a differential pressure between the forming surface of the upper former (6) and the upper surface of the glass sheets (2, 2.1).

15. The system as claimed in either of claims 13 and 14, **characterized in that** the upper former (6) has a solid convex surface.

## Patentansprüche

1. Verfahren zum Biegen von auf ihre Erweichungstemperatur erhitzten Glasscheiben (2, 2.1) mit folgenden Merkmalen:
- die Glasscheiben (2, 2.1) werden auf eine konkave Rahmenbiegeform (3, 3.1) abgelegt und unter Schwerkraftwirkung vorgebogen,
- die vorgebogenen Glasscheiben (2, 2.1) werden auf eine Übergabeform (4) mit konkaver Formfläche übergeben, deren Außenabmessungen kleiner als die von der konkaven Rahmenbiegeform (3, 3.1) umschriebene Fläche sind, indem die Übergabeform (4) in einer im wesentlichen vertikalen Relativbewegung durch die konkave Rahmenbiegeform (3, 3.1) bewegt wird,
- die Übergabeform (4) wird in vertikale Überdeckung mit einer rahmenförmigen Endbiegeform (5) mit konkaver Formfläche gebracht, wobei wieder die Außenabmessungen der Übergabeform (4) kleiner als die von der konkaven Endbiegeform (5) umschriebene Fläche sind,
- die Übergabeform (4) wird in einer im wesentlichen vertikalen Relativbewegung durch die rahmenförmige Endbiegeform (5) bewegt, wobei die Glasscheiben (2, 2.1) auf die Endbiegeform (5) abgelegt werden,
- die Glasscheiben (2, 2.1) werden in ihre endgültige Form fertig gebogen,
- nach Ende des Biegevorgangs werden die fertig geformten Glasscheiben (2, 2.1) von der Endbiegeform (5) auf eine Transportvorrichtung übergeben und abgekühlt.

2. Verfahren nach Anspruch 1, **dadurch gekennzeichnet, dass** die Glasscheiben (2, 2.1) auf der Übergabeform (4) mittels Differenzdruck einem zusätzlichen Biegevorgang unterzogen werden.

3. Verfahren nach Anspruch 1 oder 2, **dadurch gekennzeichnet, dass** die Glasscheiben (2, 2.1) auf der Endbiegeform (5) durch Schwerkraftwirkung fertig gebogen werden.

4. Verfahren nach Anspruch 1 oder 2, **dadurch gekennzeichnet, dass** die Glasscheiben (2, 2.1) mithilfe einer zur Endbiegeform (5) komplementären Oberform (6), welche die Glasscheiben (2, 2.1) zumindest in deren Randbereich auf der Endbiegeform (5) presst, fertig gebogen werden.

5. Verfahren nach Anspruch 4, **dadurch gekennzeichnet, dass** der Pressbiegeschritt zusätzlich mittels Differenzdruck unterstützt wird.

6. Verfahren nach einem der vorhergehenden Ansprüche, **dadurch gekennzeichnet, dass** einzelne Glasscheiben (2, 2.1) gebogen werden.

7. Verfahren nach Anspruch 6, **dadurch gekennzeichnet, dass** die einzelnen Glasscheiben (2, 2.1) im Anschluss an den Endbiegevorgang von der Endbiegeform (5) auf einen Vorspannring abgelegt und vorgespannt werden.

8. Verfahren nach einem der Ansprüche 1 bis 5, **dadurch gekennzeichnet, dass** mehrere aufeinander liegende Glasscheiben gebogen werden.

9. Verfahren nach Anspruch 8, **dadurch gekennzeichnet, dass** die aufeinander liegenden Glasscheiben im Anschluss an den Endbiegevorgang von der Endbiegeform (5) auf eine Kühlvorrichtung abgelegt und auf eine Temperatur unterhalb der Erweichungstemperatur abgekühlt werden.

10. Vorrichtung zum Biegen von auf ihre Erweichungstemperatur erhitzten Glasscheiben (2, 2.1), insbesondere zum Durchführen des Verfahrens nach einem der vorstehenden Ansprüche, wobei die Vorrichtung umfasst
- einen Ofen zu Erhitzen der Glasscheiben (2, 2.1),
- eine konkave Rahmenbiegeform (3, 3.1) zum Tragen und Vorbiegen der erhitzten Glasscheiben (2, 2.1),
- Antriebsmittel zum Bewegen der Rahmenbiegeform (3, 3.1), der Übergabeform (4) und der Endbiegeform (5) im Sinne der jeweiligen Übergabe der Glasscheiben,
- Mittel zum Transportieren der fertig gebogenen Glasscheiben (2, 2.1) in eine Kühlstation,
wobei die Vorrichtung **dadurch gekennzeichnet ist, dass** sie umfasst:
- eine Übergabeform (4) mit konkaver Formfläche, deren Umfang kleiner ist als der Umfang der Rahmenbiegeform (3, 3.1), und auf welche die Glasscheiben (2, 2.1) übergeben werden,
- eine Endbiegeform (5) mit konkaver Formfläche, deren Umfang größer ist als der Umfang der Übergabeform (4), und auf welche die Glasscheiben (2, 2.1) von der Übergabeform (4) übergeben werden.

11. Vorrichtung nach Anspruch 10, **dadurch gekennzeichnet, dass** die Übergabeform (4) mit einem Mittel zum Erzeugen eines Unterdrucks zwischen ihrer Formfläche und den Glasscheiben (2, 2.1) versehen ist.

12. Vorrichtung nach Anspruch 11, **dadurch gekennzeichnet, dass** die Übergabeform (4) eine vollflächige konkave Oberfläche aufweist.

13. Vorrichtung nach einem der Ansprüche 10 bis 12, **dadurch gekennzeichnet, dass** die Vorrichtung eine zur Endbiegeform (5) komplementäre Oberform (6) umfasst, welche zumindest mit den Randbereichen der auf der Endbiegeform liegenden Glasscheiben (2, 2.1) in Kontakt bringbar ist.

14. Vorrichtung nach Anspruch 13, **dadurch gekennzeichnet, dass** die Oberform (6) mit einem Mittel zum Erzeugen eines Differenzdrucks zwischen der Formfläche der Oberform (6) und der oben liegenden Oberfläche der Glasscheiben (2, 2.1) versehen ist.

15. Vorrichtung nach einem der Ansprüche 13 oder 14, **dadurch gekennzeichnet, dass** die Oberform (6) eine vollflächige konvexe Oberfläche aufweist.
